(19) Europäisches Patentamt
European Patent Office
Office européen des brevets

(11) **EP 2 477 845 B1**

(12) **EUROPÄISCHE PATENTSCHRIFT**

(45) Veröffentlichungstag und Bekanntmachung des Hinweises auf die Patenterteilung:
**01.11.2023  Patentblatt 2023/44**

(21) Anmeldenummer: **10728141.2**

(22) Anmeldetag: **01.07.2010**

(51) Internationale Patentklassifikation (IPC):
**B60Q 1/14** *(2006.01)*     **F21S 41/663** *(2018.01)*

(52) Gemeinsame Patentklassifikation (CPC):
**B60Q 1/1415; F21S 41/663;** B60Q 2400/30

(86) Internationale Anmeldenummer:
**PCT/EP2010/003975**

(87) Internationale Veröffentlichungsnummer:
**WO 2011/029493 (17.03.2011 Gazette 2011/11)**

(54) **FAHRZEUGSCHEINWERFER**

VEHICLE HEADLIGHT

PROJECTEUR DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.09.2009  DE 102009041189**

(43) Veröffentlichungstag der Anmeldung:
**25.07.2012  Patentblatt 2012/30**

(73) Patentinhaber: **Bayerische Motoren Werke Aktiengesellschaft**
**80809 München (DE)**

(72) Erfinder:
• **WEIL, Christopher**
  **80469 Muenchen (DE)**
• **MORGENSTERN, Sebastian**
  **80809 Muenchen (DE)**
• **ERDL, Helmut**
  **83126 Flintsbach (DE)**
• **DANNER, Stefan**
  **85716 Unterschleissheim (DE)**

(74) Vertreter: **Mayer-Martin, Christian**
**Bayerische Motoren Werke AG**
**Patentabteilung AJ-5**
**80788 München (DE)**

(56) Entgegenhaltungen:
EP-A2- 2 058 585         DE-A1- 10 205 779
DE-A1-102006 046 168     US-A1- 2006 044 818
US-A1- 2008 062 712      US-A1- 2009 129 083

EP 2 477 845 B1

## EP 2 477 845 B1

**Beschreibung**

Die Erfindung betrifft einen Fahrzeugscheinwerfer.

Bekannte Fahrzeugscheinwerfer sind in der Lage, eine Abblendlicht-Leuchtfläche zur Realisierung einer Abblend-Lichtverteilung und unabhängig davon eine von der Abblendlicht-Leuchtfläche verschiedene Tagfahrlicht-Leuchtfläche zur Realisierung einer Tagfahrlicht-Lichtverteilung zu realisieren.

Es ist ein immer bedeutender werdendes Ziel von Leuchtenentwicklern, Kraftfahrzeugleuchten, insbesondere Fahrzeugscheinwerfer, mit einem hohen Wiedererkennungswert zu schaffen. In der Vergangenheit wurde dies insbesondere durch besonders ausgeprägte Realisierungen der Tagfahrlicht-Leuchtfläche versucht. So sind besonders markante Tagfahrlicht-Leuchtflächen in Form von Ringen, Doppelringen oder Schwingen bekannt. Der durch solche markanten Tagfahrlicht-Leuchtflächen erzielbare Wiedererkennungswert für den Scheinwerfer, das Fahrzeug oder sogar die Fahrzeugmarke wird allerdings dadurch wieder abgeschwächt, dass der gleiche Scheinwerfer in der Dunkelheit ein vollkommen anderes, auf einer Abblendlicht-Leuchtfläche basierendes, Erscheinungsbild vermittelt, selbst dann wenn die Abblendlicht-Leuchtfläche die Tagfahrlichtleuchtfläche umfasst.

Es sind außerdem bereits Scheinwerfer bekannt, die zur Realisierung des Abblendlichtes Leuchtdioden einsetzen. Es wird derzeit davon ausgegangen, dass sich diese Entwicklung aufgrund ständig effizienter werdender Leuchtdioden in den nächsten Jahren verstärken wird.

US 2009/129083 A1 offenbart einen Projektionsfahrzeugscheinwerfer, wobei in der LED-Einheit die erste LED-Anordnung getrennt von der zweiten LED-Anordnung ist. Die erste LED-Anordnung beleuchtet und emittiert ein erstes Bestrahlungslicht - Abblendlicht. Wenn die zweite LED-Anordnung aufleuchtet, um ein zweites Bestrahlungslicht L2 zu emittieren, wird ein Teil der ersten LED-Anordnung, insbesondere zwei LED-Elemente der vier LED-Elemente der ersten LED-Anordnung, die am nächsten zu den LED-Elementen der zweiten LED-Anordnung liegen, gleichzeitig aufleuchten. Das zweite Bestrahlungslicht ist ein Licht mit der Funktion des Tagfahrlichtes, das weit gestreut ist und daher eine geringe Beleuchtungsstärke aufweist.

Aus der EP2058585A2, der DE 10205779A1, der US2008/062712A1, der DE102006046168 A1 und der US 2006/044818A1 sind weitere Scheinwerfer bekannt.

Der Erfindung liegt nun die Aufgabe zu Grunde, einen Fahrzeugscheinwerfer mit hohem Wiedererkennungswert anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, den Wiedererkennungswert eines Fahrzeugscheinwerfers dadurch zu erhöhen, dass durch den Fahrzeugscheinwerfer bezogen auf die Leuchtfläche ein im Wesentlichen identisches Erscheinungsbild in der Nacht und am Tag vermittelt wird.

Ein erfindungsgemäßer Fahrzeugscheinwerfer umfasst dazu eine Vielzahl von Halbleiterstrahlern, insbesondere Leuchtdioden oder Leuchtdiodengruppen, zur insbesondere alternativen Erzeugung einer Abblendlichtverteilung und einer Tagfahrlichtverteilung, je nachdem ob der Scheinwerfer auf Abblendlicht oder Tagfahrlicht geschaltet ist.

Dabei können Halbleiterstrahler vorgesehen sein, die entweder nur einen Beitrag zur Abblendlichtverteilung oder nur einen Beitrag zur Tagfahrlichtverteilung leisten also nur beim Schalten des Scheinwerfers auf Abblendlicht oder nur beim Schalten des Scheinwerfers auf Tagfahrlicht aktiv sind, oder die beim Schalten des Scheinwerfers auf Abblendlichtverteilung einen Beitrag zur Abblendlichtverteilung und beim Schalten des Scheinwerfers auf Tagfahrlichtverteilung einen Beitrag zur Tagfahrlichtverteilung liefern.

Zur Erzeugung der Abblendlichtverteilung wird durch den Fahrzeugscheinwerfer eine Abblendlicht-Leuchtfläche generiert. Beispielsweise ist die von dem Fahrzeugscheinwerfer erzeugte Abblendlichtverteilung, insbesondere für einen frontal vor dem Scheinwerfer stehenden Betrachter, in Form einer Abblendlicht-Leuchtfläche wahrnehmbar.

Zur Erzeugung der Tagfahrlichtverteilung wird durch den Fahrzeugscheinwerfer eine Tagfahrlicht-Leuchtfläche generiert. Beispielsweise ist die von dem Fahrzeugscheinwerfer erzeugte Tagfahrlichtverteilung, insbesondere für einen frontal vor dem Scheinwerfer stehenden Betrachter, in Form einer Tagfahrlicht-Leuchtfläche wahrnehmbar.

Der Fahrzeugscheinwerfer ist nun derart ausgeführt, dass die Abblendlicht-Leuchtfläche und die Tagfahrlicht-Leuchtfläche im Wesentlichen identisch sind. Insbesondere teilen sich die Abblendlicht-Leuchtfläche und die Tagfahrlicht-Leuchtfläche eine gemeinsame Leuchtfläche. Insbesondere sind die Abblendlicht-Leuchtfläche und die Tagfahrlicht-Leuchtfläche physikalisch identisch. Die Abblendlicht-Leuchtfläche bzw. die Tagfahrlicht-Leuchtfläche kann dabei ein- oder mehrteilig sein.

Die Gesamt-Abblendlichtverteilung bzw. Gesamt-Tagfahrlichtverteilung wird in der Regel durch eine zusätzliche Berücksichtigung des von einem zweiten Fahrzeugscheinwerfer abgestrahlten Lichts erzeugt. Wenn im Rahmen der Erfindung auf eine Lichtverteilung, Abblendlichtverteilung oder Tagfahrlichtverteilung Bezug genommen wird, ist dies in der Regel der Teil der Gesamt-Abblendlichtverteilung bzw. Gesamt-Tagfahrlichtverteilung, der auf dem betroffenen, insbesondere erfindungsgemäßen, Fahrzeugscheinwerfer oder Scheinwerfermodul basiert.

Die Gesamt-Abblendlicht-Leuchtfläche bzw. Gesamt-Tagfahrlicht-Leuchtfläche kann gebildet werden durch

2

mehrere Leuchtflächen, die jeweils einem von mehreren Scheinwerfermodulen eines von mehreren Scheinwerfern zugeordnet sein können.

Die Formulierung "die Abblendlicht-Leuchtfläche und die Tagfahrlicht-Leuchtfläche sind im Wesentlichen identisch" bedeutet, dass die Tagfahrlicht-Leuchtfläche zumindest 60 %, insbesondere zumindest 70% oder zumindest 80% oder zumindest 90 % oder zumindest 95% der Abblendlicht-Leuchtfläche überdeckt und, dass die Abblendlicht-Leuchtfläche zumindest 60 %, insbesondere zumindest 70% oder zumindest 80% oder zumindest 90 % oder zumindest 95% der Tagfahrlicht-Leuchtfläche überdeckt.

Eine Leuchtfläche ist vorzugsweise der Teil einer den Halbleiterstrahlern vorgelagerten optischen Einrichtung, wie beispielsweise einer Vorsatzoptik, einer Linse, einer Zwischenlichtscheibe, einer Streuscheibe oder einer Schutzscheibe, die für einen, insbesondere in Fahrtrichtung, vor dem Fahrzeugscheinwerfer stehenden Betrachter als leuchtende Fläche wahrnehmbar ist oder die wahrnehmbare leuchtende Geometrie bestimmt. Die Streuscheibe oder Schutzscheibe kann dabei und in den folgenden Ausgestaltungen auch eine Fresneloptik umfassen.

Ergänzend dazu kann eine Leuchtfläche im Sinne einer LichtAustrittsfläche oder Licht-Durchtrittsfläche bestimmt sein und ist gemäß Erfindung der Teil einer den Halbleiterstrahlern vorgelagerten optischen Einrichtung, wie beispielsweise einer Vorsatzoptik, einer Linse, einer Zwischenlichtscheibe, einer Streuscheibe oder einer Schutzscheibe, durch welchen mindestens 70%, vorzugsweise mindestens 80% oder mindestens 90% oder mindestens 95 % des von dem betroffenen Scheinwerfer oder Scheinwerfermodul abgegebenen Lichts zur Erzeugung der entsprechenden Lichtverteilung hindurchtreten.

Durch die Erfindung wird ein Scheinwerfer geschaffen, der bei Abblendlicht und Tagfahrlicht zumindest teilweise ein im Wesentlichen identisches Erscheinungsbild vermittelt. Dies führt zu einem erhöhten Wiedererkennungswert.

Die Halbleiterstrahler sind vorzugsweise aufgeteilt auf ein erstes Scheinwerfermodul und ein zweites Scheinwerfermodul, welche jeweils einen Beitrag zur Abblendlichtverteilung und/oder Tagfahrlichtverteilung leisten. Daneben kann es auch einen weiteren erfindungsgemäßen Fahrzeugscheinwerfer geben, der ebenfalls einen Beitrag zur Gesamt-Abblendlichtverteilung und/oder Gesamt-Tagfahrlichtverteilung leistet.

Vorzugsweise ist dann, insbesondere für einen frontal vor dem Scheinwerfer stehenden Betrachter, die Abblendlichtverteilung in Form einer Abblendlicht-Leuchtfläche des ersten und/oder zweiten Scheinwerfermoduls wahrnehmbar und/oder die Tagfahrlichtverteilung in Form einer Tagfahrlicht-Leuchtfläche des ersten und/oder zweiten Scheinwerfermoduls wahrnehmbar. Zur Erzeugung der Tagfahrlichtverteilung bzw. Abblendlichtverteilung wird durch ein oder die Scheinwerfermodule vorzugsweise jeweils eine Tagfahrlicht-Leuchtfläche bzw. eine Abblendlicht-Leuchtfläche erzeugt.

Die Abblendlicht-Leuchtfläche und/oder die Tagfahrlicht-Leuchtfläche der beiden Scheinwerfermodule sind gemäß einer bevorzugten Ausführungsform hinsichtlich ihrer Gestalt, Geometrie oder Umrissform im Wesentlichen identisch.

Dadurch werden gestalterische Freiheitsgrade geschaffen, um den Wiedererkennungswert weiter zu erhöhen.

Es ist eine Weiterbildung der Erfindung, dass zur Erzeugung der Abblend-lichtverteilung und der Tagfahrlichtverteilung Halbleiterstrahler gemeinsam genützt werden oder identische Halbleiterstrahler benützt werden. Mindestens ein Halbleiterstrahler wird dabei also sowohl zur Erzeugung der Abblendlichtverteilung als auch der Tagfahrlichtverteilung verwendet.

Dadurch können Kosten für Komponenten, Gewicht und Bauraum reduziert werden.

Es ist vorgesehen, dass das Verhältnis von Flächenumfang zu Flächeninhalt bezogen auf die Abblendlicht-Leuchtfläche und/oder die Tagfahrlicht-Leuchtfläche eines Fahrzeugscheinwerfers oder eines Scheinwerfermoduls größer ist als bezogen auf ein die Abblendlicht-Leuchtfläche und/oder die Tagfahrlicht-Leuchtfläche umschreibendes Rechteck, insbesondere dann, wenn das Verhältnis von Flächenumfang zu Flächeninhalt bezogen auf die Abblendlicht-Leuchtfläche und/oder die Tagfahrlicht-Leuchtfläche eines Fahrzeugscheinwerfers oder eines Scheinwerfermoduls 10% größer ist oder 20% größer ist oder 30 % größer ist als das Verhältnis von Flächenumfang zu Flächeninhalt bezogen auf ein die Abblendlicht-Leuchtfläche und/oder die Tagfahrlicht-Leuchtfläche umschreibendes Rechteck. Denn solche Leuchtflächen sind im Vergleich zu herkömmlichen runden oder rechteckigen Leuchtflächen besonders markant und einprägsam. Solche Flächen können aber vernünftig nur basierend auf einer Vielzahl von Halbleiterstrahlern realisiert werden.

Besonders bevorzugt ist vorgesehen, dass die Halbleiterstrahler und zu diesen gehörige vorgelagerte optische Elemente oder Einrichtungen derart ausgeführt und relativ zueinander angeordnet sind, dass die Abblendlicht-Leuchtfläche an sich und/oder die Tagfahrlicht-Leuchtfläche an sich hinsichtlich der, insbesondere für einen vor dem Fahrzeugscheinwerfer stehenden Betrachter, Helligkeit über die entsprechende Leuchtfläche als im Wesentlichen homogen wahrnehmbar ist.

Dadurch wird die Wiedererkennbarkeit der entsprechenden Leuchtflächengeometrie verstärkt.

Vorzugsweise sind hierfür die Halbleiterstrahler und zu diesen gehörige vorgelagerte optische Elemente oder Einrichtungen derart ausgeführt und relativ zueinander angeordnet, dass die Leuchtdichteverteilung der Abblendlicht-Leuchtfläche und/oder der Tagfahrlicht-Leuchtfläche über die entsprechende Leuchtfläche im Wesentlichen konstant ist.

Eine betrachtete Leuchtfläche wird insbesondere dann als homogen leuchtend wahrgenommen, wenn für die maximale Leuchtdichte (max_Leuchtdichte) der Leuchtfläche und die kleinste Leuchtdichte (min_Leuchtdichte) der Leuchtfläche gilt:

$$\log(\text{max\_Leuchtdichte}) - \log(\text{min\_Leuchtdichte}) < |1|.$$

Es soll daher im Rahmen dieser bevorzugten Ausführungsform für mindestens 80% oder mindestens 90% der Tagfahrlicht-Leuchtfläche und/oder Abblendlicht-Leuchtfläche insbesondere gelten:

$$\log(\text{max\_Leuchtdichte}) - \log(\text{min\_Leuchtdichte}) < |1|.$$

Vorzugsweise umfasst der Fahrzeugscheinwerfer eine Trägereinrichtung zum mittelbaren oder unmittelbaren Tragen von Halbleiterstrahlern und/oder von optischen Elementen des ersten und/oder zweiten Scheinwerfermoduls. Durch eine Verschwenkeinrichtung kann die Trägereinrichtung derart verschwenkt werden, dass die durch das erste und/oder zweite Scheinwerfermodul erzeugte Lichtverteilung vertikal bewegt wird. Durch eine Steuereinrichtung wird die Verschwenkeinrichtung derart angesteuert, dass zur Erzeugung der Tagfahrlichtverteilung zumindest ein Teil der Abblendlichtverteilung nach oben geschwenkt und/oder zumindest teilweise genützt wird. Es werden also Halbleiterstrahler und/oder optische Elemente zumindest zum Teil zur Erzeugung beider Lichtverteilungen genützt. Besonders bevorzugt werden Halbleiterstrahler, die zur Erzeugung der Abblendlichtverteilung genützt werden, auch zur Erzeugung der Tagfahrlichtverteilung, insbesondere gedimmt, genützt. Zur Erzeugung der Tagfahrlichtverteilung können alternativ oder ergänzend zu den Halbleiterstrahlern für die Erzeugung der Abblendlichtverteilung weitere Halbleiterstrahler vorgesehen sein.

Dadurch können Kosten für Komponenten, Gewicht und Bauraum reduziert werden.

Ein bevorzugter Fahrzeugscheinwerfer umfasst zumindest einen Abblendlicht-Halbleiterstrahler zur Erzeugung zumindest der Abblendlichtverteilung und zumindest einen Tagfahrlicht-Halbleiterstrahler zur Erzeugung der Tagfahrlichtverteilung. Neben diesen Halbleiterstrahlern können natürlich weitere Halbleiterstrahler zur Erzeugung der entsprechenden Lichtverteilung beitragen. Der Abblendlicht-Halbleiterstrahler und der Tagfahrlicht-Halbleiterstrahler und zumindest ein dem Abblendlicht-Halbleiterstrahler und/oder dem Tagfahrlicht-Halbleiterstrahler zugeordnetes vorgelagertes optisches Element sind derart ausgeführt und relativ zueinander angeordnet, dass von dem Abblendlicht-Halbleiterstrahler stammendes Licht und von dem Tagfahrlicht-Halbleiterstrahler stammendes Licht durch das optische Element abgebildet (projiziert, gebündelt gelenkt, ...) wird, insbesondere um die Tagfahrlicht-Leuchtfläche und/oder Abblendlicht-Leuchtfläche zu erzeugen.

Auch durch diese Doppelnutzung eines optischen Elementes für die Erzeugung der Tagfahrlicht-Leuchtfläche und/oder Abblendlicht-Leuchtfläche können Kosten für Komponenten, Gewicht und Bauraum reduziert werden.

Besonders bevorzugt ist vorgesehen, dass dem Abblendlicht-Halbleiterstrahler und/oder dem Tagfahrlicht-Halbleiterstrahler zumindest eine Linse derart vorgelagert ist, dass von dem Abblendlicht-Halbleiterstrahler stammendes Licht und von dem Tagfahrlicht-Halbleiterstrahler stammendes Licht durch die Linse abgebildet wird, wobei der Tagfahrlicht-Halbleiterstrahler tiefer platziert ist als der Abblendlicht-Halbleiterstrahler.

Durch die relativ zum Abblendlicht-Halbleiterstrahler Tieferplatzierung des Tagfahrlicht-Halbleiterstrahlers kann in Verbindung mit einer geeigneten Linse erreicht werden, dass das von dem Tagfahrlicht-Halbleiterstrahler ausgehende Licht eine relativ hohe Platzierung des Schwerpunktes der resultiereden Lichtverteilung bewirkt. Dies ist zur Erzeugung der Tagfahrlichtverteilung vorteilhaft, da auch der Schwerpunkt der Tagfahrlichtverteilung relativ zum Schwerpunkt der Abblendlichtverteilung hoch liegt.

Besonders bevorzugt ist in diesem Zusammenhang auch vorgesehen, dass von dem Tagfahrlicht-Halbleiterstrahler und/oder von dem Abblendlicht-Halbleiterstrahler stammendes Licht durch zumindest einen Lichtleiter zu einer entsprechenden Tagfahrlicht-Auskoppelstelle bzw. Abblendlicht-Auskoppelstelle geleitet wird. Der Tagfahrlicht-Halbleiterstrahler und/oder die Auskoppelstelle des Tagfahrlicht-Halbleiterstrahlers sind dann aus oben genanntem Grund ebenfalls tiefer platziert als der Abblendlicht-Halbleiterstrahler und/oder die Auskoppelstelle des Abblendlicht-Halbleiterstrahlers.

Durch die Leitung des Lichtes durch einen Lichtleiter an die richtige Stelle kann beispielsweise ohne entsprechende Platzierung eines Tagfahrlicht-Halbleiterstrahlers selbst erreicht werden, dass trotzdem eine relativ kleine Linse sowohl zur Erzeugung der Tagfahrlichtverteilung als auch der Abblendlichtverteilung verwendet werden kann.

Es ist eine Weiterbildung der Erfindung, dass das erste, insbesondere äußere, Scheinwerfermodul horizontal schwenkbar ist. Dadurch kann mit dem Fahrzeugscheinwerfer eine Kurvenlichtfunktion realisiert werden.

Besonders bevorzugt ist vorgesehen, dass ein unterer Abschnitt, insbesondere die untersten 10% oder 20% oder 30%, der Abblendlicht-Leuchtfläche eines Scheinwerfermoduls oder des Fahrzeugscheinwerfers, insbesondere im Wesentlichen, steiler steht als ein oberer Abschnitt, insbesondere die obersten 10% oder 20% oder 30%, der Abblendlicht-Leuchtfläche eines Scheinwerfermoduls oder des Fahrzeugscheinwerfers. Dadurch wird erreicht, dass der Fahrzeugscheinwerfer ohne großen Bauraumverlust in ein aerodynamisch günstig geformtes Scheinwerfergehäuse integriert werden kann, bei dem insbesondere die Abdeckscheibe ebenfalls im unteren Bereich steiler ist als im oberen Bereich.

Vorzugsweise wird der obere, insbesondere rechte, für die Beleuchtung der eigenen Fahrspur vorgesehene Anteil der Abblendlichtverteilung, der durch den entsprechenden Fahrzeugscheinwerfer oder das entsprechende Scheinwerfermodul zur Gesamt-Abblendlichtverteilung beigetragen wird, im Wesentlichen, insbesondere zu mehr als 50% oder 60% oder 70 % oder 80%, durch einen unteren Abschnitt, insbesondere die untersten 10% oder 20% oder 30%, der Abblendlicht-Leuchtfläche des ersten Scheinwerfermoduls und/oder des zweiten Scheinwerfermoduls erzeugt. Dieser untere Abschnitt der Abblendlicht-Leuchtfläche steht in der Regel steiler und kann daher schärfer abgebildet werden. Daher eignet sich ein solcher unterer Abschnitt besonders für die Erzeugung des scharf zu begrenzenden oberen, insbesondere rechten, für die Beleuchtung der eigenen Fahrspur, vorgesehenen Anteils der Abblendlichtverteilung.

Besonders bevorzugt ist ein Fahrzeugscheinwerfer bei dem der ansteigende, insbesondere asymmetrische, Teil der Hell/Dunkelgrenze der Abblendlichtverteilung im Wesentlichen, insbesondere zu mehr als 50% oder 60% oder 70 % oder 80% durch einen unteren Abschnitt, insbesondere die untersten 10% oder 20% oder 30%, der Abblendlicht-Leuchtfläche des ersten Scheinwerfermoduls und/oder des zweiten Scheinwerfermoduls erzeugt wird. Die "50 % oder 60% oder 70 % oder 80%" beziehen sich dabei wieder auf den Anteil an der Abblendlichtverteilung, der von dem entsprechenden Fahrzeugscheinwerfer oder das entsprechende Scheinwerfermodul zur Gesamt-Abblendlichtverteilung beigetragen wird. Eine steil stehende Fläche kann zur Erzeugung einer vorgegebenen Abblendlichtverteilung in der Regel schärfer abgebildet werden. Daher wird die zur Erzielung einer vorgegebenen Abblendlichtverteilung relativ gute Abbildbarkeit des in der Regel steil stehenden Anteils der unteren der Abblendlicht-Leuchtfläche ausgenutzt.

Alternativ oder ergänzend dazu wird der symmetrische Teil der Hell/Dunkelgrenze der Abblendlichtverteilung im Wesentlichen, insbesondere zu mehr als 50% oder 60% oder 70 % oder 80% oder 90 %, durch einen unteren Abschnitt, insbesondere die untersten 10% oder 20% oder 30%, der der Abblendlicht-Leuchtfläche des ersten Scheinwerfermoduls und/oder des zweiten Scheinwerfermoduls erzeugt. Die "50 % oder 60% oder 70 % oder 80%" beziehen sich dabei wieder auf den Anteil an der Abblendlichtverteilung, der von dem entsprechenden Fahrzeugscheinwerfer oder das entsprechende Scheinwerfermodul zur Gesamt-Abblendlichtverteilung beigetragen wird. Auch hier wird die relativ gute Abbildbarkeit des in der Regel steil stehenden Anteils der unteren der Abblendlicht-Leuchtfläche ausgenutzt.

Vorzugsweise wird durch verschiedene Halbleiterstrahler, insbesondere Leuchtdioden oder Leuchtdiodengruppen, jeweils eine Lichtstärkeverteilung mit zugeordnetem Schwerpunkt erzeugt, wobei die Halbleiterstrahler und zu diesen gehörige, insbesondere vorgelagerte, optische Elemente derart angeordnet und ausgeführt sind, dass die durch den untersten Halbleiterstrahler, insbesondere durch die unterste Leuchtdiodengruppe, erzeugte Lichtstärkeverteilung den höchsten Schwerpunkt von diesen Lichtstärkeverteilungen aufweist.

Besonders bevorzugt ist vorgesehen, dass durch verschiedene Halbleiterstrahler, insbesondere Leuchtdioden oder Leuchtdiodengruppen, jeweils eine Lichtstärkeverteilung mit zugeordnetem Schwerpunkt erzeugt wird, wobei die Halbleiterstrahler und zu diesen gehörige, insbesondere vorgelagerte, optische Elemente derart angeordnet und ausgeführt sind, dass durch den oder die untersten Halbleiterstrahler, insbesondere durch die unterste Leuchtdiodengruppe, zumindest eines Scheinwerfermoduls die Hell/Dunkel-Grenze der Abblendlichtverteilung erzeugt wird.

Auch dadurch wird mit relativ geringem Aufwand ein Scheinwerfer geschaffen, der bei Tag und Nacht ein zumindest ähnliches Erscheinungsbild aufweist.

Im Rahmen der Erfindung liegen selbstverständlich auch Weiterbildungen dieses Scheinwerfers, die den von Anspruch 1 abhängigen Ansprüchen entsprechen.

Im Folgenden wird die Erfindung anhand von Beispielen unter Bezugnahme auf die folgenden Figuren näher erläutert:

Figur 1    zeigt eine schematische Prinzipdarstellung eines Scheinwerfermoduls in Vorderseitenansicht;

Figur 2    zeigt eine schematische Prinzipdarstellung eines Fahrzeugscheinwerfers in Vorderseitenansicht;

Figur 3    zeigt eine Prinzipdarstellung einer Abblendlichtverteilung.

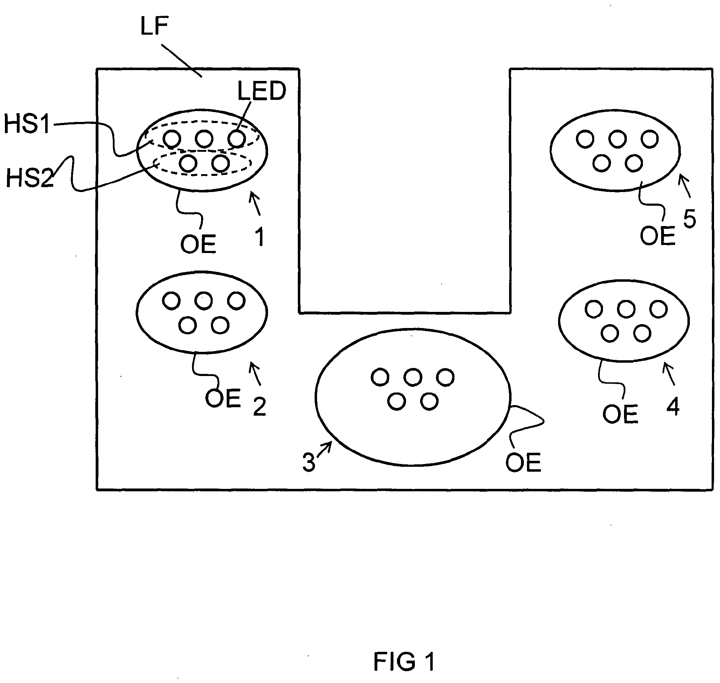

Das in Figur 1 gezeigte Scheinwerfermodul zeigt fünf Gruppen (Leuchtgruppen) 1,2,3,4,5 von jeweils fünf Leuchtdioden LED. Die fünf Leuchtdioden LED jeder Gruppe sind gegliedert in zwei Halbleiterstrahler HS1 und HS2 (in der Figur exemplarisch nur für eine Gruppe 1 bezeichnet), wobei der erste Halbleiterstrahler HS1 höher platziert ist als der zweite Halbleiterstrahler HS2. Die Halbleiterstrahler HS1,HS2 können eine Leuchtdiode LED oder eine Gruppe von Leuchtdioden LED umfassen.

Jeder Gruppe 1,2,3,4,5 ist zudem zumindest ein den Leuchtdioden LED der Gruppe vorgelagertes optisches Element zugeordnet, das beispielsweise ein oder mehrere Linsen, eine Fresneloptik, eine Streuscheibe und/oder eine Zwischenlichtscheibe umfassen kann. Das einer Gruppe 1,2,3,4,5 zugeordnete optische Element kann mehrteilig gebildet sein und/oder kann Teil eines größeren optischen Elementes, wie beispielsweise einer Streuscheibe, sein, das mehreren Gruppen 1,2,3,4,5 zugeordnet und vorgelagert ist. Eine mehreren Gruppen vorgelagerte Streuscheibe kann dabei auch ein einer bestimmten Gruppe vorgelagertes optisches Element, wie beispielsweise eine Fresneloptik, umfassen. Es ist auch möglich dass einer Gruppe 1,2,3,4,5 ein optisches Element, wie eine Linse, vorgelagert ist, diesem optischen Element dann ein größeres optische Element, wie eine Streuscheibe, vorgelagert ist, das auch anderen Gruppen 1,2,3,4,5 vorgelagert ist.

Im Ergebnis wird durch die Gruppen 1,2,3,4,5 und die zugeordneten oder vorgelagerten optischen Elemente eine für einen vor dem Scheinwerfer stehenden Betrachter wahrnehmbare Leuchtfläche LF erzeugt, die bei der Erzeugung einer Abblendlichtverteilung Abblendlicht-Leuchtfläche und der Erzeugung einer Tagfahrlichtverteilung Tagfahrlicht-Leuchtfläche genannt wird, die beide im Rahmen der Erfindung aber im Wesentlichen identisch sind.

Zur Erzeugung der Abblendlichtverteilung wird von jeder Gruppe 1,2,3,4,5 der obere Halbleiterstrahler HS1, also die oberen drei Leuchtdioden LED, aktiviert. Die unteren Halbleiterstrahler HS2 sind deaktiviert.

Zur Erzeugung der Tagfahrlichtverteilung wird von jeder Gruppe 1,2,3,4,5 der untere Halbleiterstrahler HS2, also die unteren zwei Leuchtdioden LED, aktiviert. Die oberen Halbleiterstrahler HS1 sind deaktiviert, teilweise aktiviert oder gedimmt aktiviert. Zudem kann eine nicht dargestellte Trägereinrichtung, welche mittelbar die Leuchtgruppen 1,2,3,4,5 samt zugeordneter optischer Elemente trägt, zur Erzeugung der Tagfahrlichtverteilung derart verschwenkt werden, dass die durch die Leuchtgruppen 1,2,3,4,5, insbesondere die oberen Halbleiterstrahler HS1, erzeugte Lichtverteilung nach oben bewegt wird.

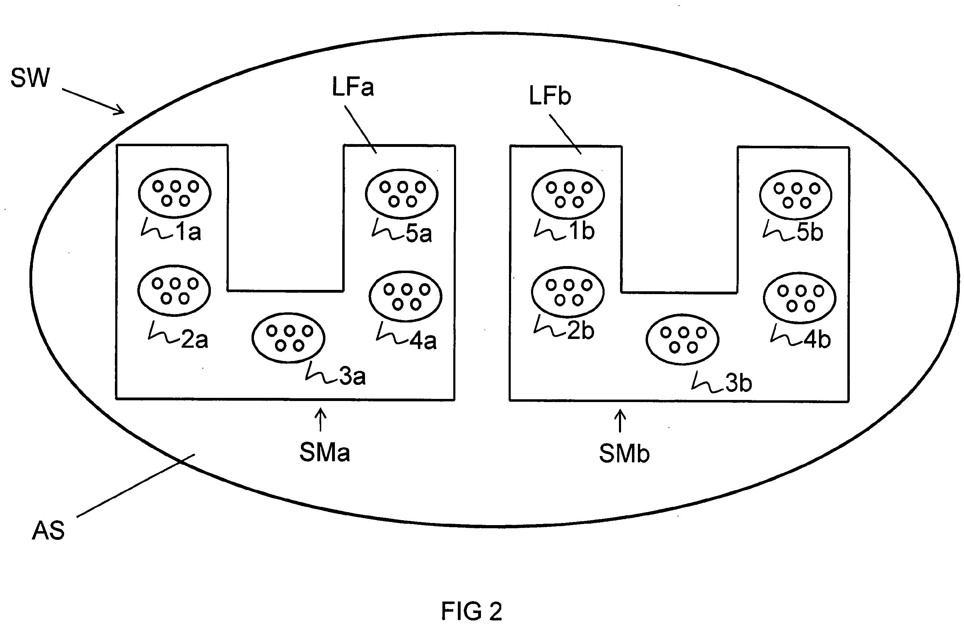

Figur 2 zeigt einen Fahrzeugscheinwerfer SW, der zwei der anhand von Figur 1 erläuterten Scheinwerfermodule SMa,SMb umfasst, welche hinter einer gemeinsamen Abdeckscheibe AS angeordnet sind. Diese umfassen jeweils wieder fünf Leuchtgruppen 1a,2a,3a,4a,5a bzw. 1b,2b,3b,4b,5b. Durch jedes Scheinwerfermodul SMa bzw. SMb wird wieder eine Leuchtfläche LFa bzw. LFb erzeugt. Diese Leuchtflächen LFa,LFb sind jeweils bei der Erzeugung einer Abblendlichtverteilung und einer Tagfahrlichtverteilung im Wesentlichen identisch. Beide Leuchtflächen LFa, LFb leisten jeweils einen Beitrag zur Gesamt-Abblendlichtverteilung und zur Gesamt-Tagfahrlichtverteilung.

Neben diesem Fahrzeugscheinwerfer kann ein weiterer entsprechender Fahrzeugscheinwerfer SW vorgesehen sein, um eine Gesamt-Abblendlichtverteilung und eine Gesamt-Tagfahrlichtverteilung zu erzeugen.

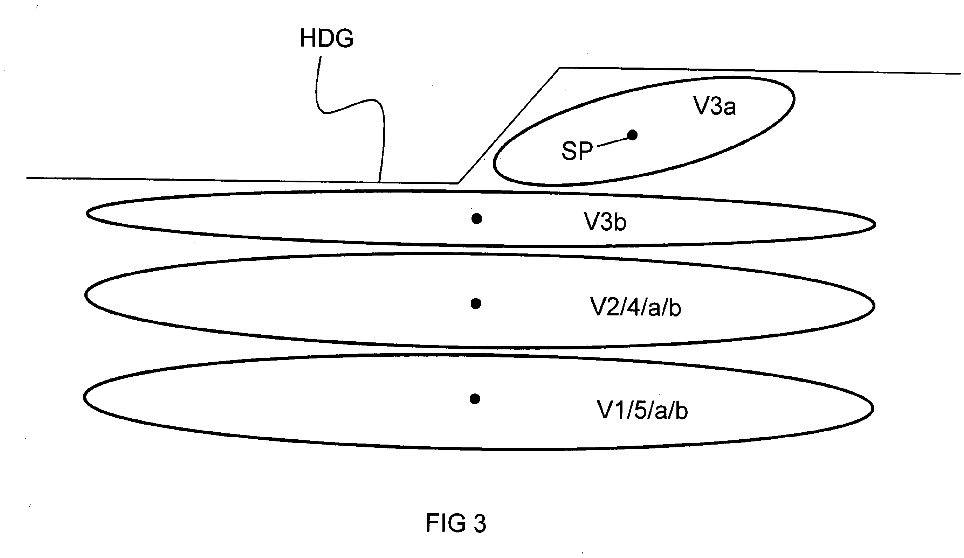

Figur 3 zeigt eine Abblendlichtverteilung (vereinfachte Darstellung) mit der typischen Hell-Dunkel-Grenze HDG gegliedert in ihre Bestandteile V3a,V3b,V2a/b,V1 wobei jeder Bestandteil einen Lichtstärkeschwerpunkt SP (in der Figur exemplarisch nur für einen Bestandteil V3a bezeichnet) aufweist. Der Bestandteil V3a der Abblendlichtverteilung wird dabei durch den oberen Halbleiterstrahler HS1 der Leuchtgruppe 3a bewirkt. Der Bestandteil V3b der Abblendlichtverteilung wird dabei durch den oberen Halbleiterstrahler HS1 der Leuchtgruppe 3b bewirkt. Der Bestandteil V2/4/a/b der Abblendlichtverteilung wird dabei durch den oberen Halbleiterstrahler HS1 der Leuchtgruppen 2a,2b,4a,4b bewirkt. Der Bestandteil V1/5/a/b der Abblendlichtverteilung wird dabei durch den oberen Halbleiterstrahler HS1 der Leuchtgruppen 1a, 1b,5a,5b bewirkt.

Dies kann auch wie folgt betrachtet werden: Der Bestandteil V3a der Abblendlichtverteilung wird durch die Leuchtgruppe 3a oder die entsprechende durch die Leuchtgruppe 3a zum Leuchten gebrachte Leuchtfläche bewirkt. Der Bestandteil V3b der Abblendlichtverteilung wird durch die Leuchtgruppe 3b oder die entsprechende durch die Leuchtgruppe 3b zum Leuchten gebrachte Leuchtfläche bewirkt. Der Bestandteil V2/4/a/b der Abblendlichtverteilung wird durch die Leuchtgruppen 2a,2b,4a,4b oder die entsprechenden durch die Leuchtgruppen 2a,2b,4a,4b zum Leuchten gebrachten Leuchtflächen bewirkt. Der Bestandteil V1/5/a/b der Abblendlichtverteilung wird durch die Leuchtgruppen 1a, 1b,5a,5b oder die entsprechenden durch die Leuchtgruppen 1a, 1b,5a,5b zum Leuchten gebrachten Leuchtflächen bewirkt.

Bei einer nicht dargestellten Tagfahrlichtverteilung werden durch die verschiedenen Leuchtgruppen verschiedene Leuchtflächen erzeugt, die wieder entsprechende Bestandteile der Tagfahrlichtverteilung bewirken. Dabei liegt der Schwerpunkt einer Lichtstärkeverteilung, die bei eingeschaltetem Tagfahrlicht durch eine bestimmte Leuchtfläche erzeugt wird höher als der Schwerpunkt einer Lichtstärkeverteilung, die bei eingeschaltetem Abblendlicht durch eine bestimmte Leuchtfläche erzeugt wird.

## Patentansprüche

1. Fahrzeugscheinwerfer,

   - mit einer Vielzahl von Halbleiterstrahlern (HS1,HS2) insbesondere Leuchtdioden (LED) oder Leuchtdiodengruppen (1,2,3,4,5), zur alternativen Erzeugung einer Abblendlichtverteilung und einer Tagfahrlichtverteilung,
   - wobei zur Erzeugung der Abblendlichtverteilung durch den Fahrzeugscheinwerfer eine Abblendlicht-Leuchtfläche generiert wird,

- wobei zur Erzeugung der Tagfahrlichtverteilung durch den Fahrzeugscheinwerfer eine Tagfahrlicht-Leuchtfläche generiert wird, und

- wobei die Abblendlicht-Leuchtfläche und die Tagfahrlicht-Leuchtfläche im Wesentlichen identisch sind, was bedeutet, dass die Tagfahrlicht-Leuchtfläche zumindest 60 % der Abblendlicht-Leuchtfläche überdeckt und die Abblendlicht-Leuchtfläche zumindest 60% der Tagfahrlicht-Leuchtfläche überdeckt,

- wobei eine Leuchtfläche (LF) der Teil einer den Halbleiterstrahlern (HS1,HS2) vorgelagerten optischen Einrichtung ist, durch welchen mindestens 70% des von dem Fahrzeugscheinwerfer abgegebenen Lichts zur Erzeugung der entsprechenden Lichtverteilung hindurchtreten, und

- wobei das Verhältnis von Flächenumfang zu Flächeninhalt bezogen auf die Abblendlicht-Leuchtfläche und die Tagfahrlicht-Leuchtfläche größer ist als bezogen auf ein diese Abblendlicht-Leuchtfläche und diese Tagfahrlicht-Leuchtfläche umschreibendes Rechteck, oder das Verhältnis von Flächenumfang zu Flächeninhalt bezogen auf die Abblendlicht-Leuchtfläche größer ist als bezogen auf ein diese Abblendlicht-Leuchtfläche umschreibendes Rechteck, oder das Verhältnis von Flächenumfang zu Flächeninhalt bezogen auf die Tagfahrlicht-Leuchtfläche größer ist als bezogen auf ein diese Tagfahrlicht-Leuchtfläche umschreibendes Rechteck.

2. Fahrzeugscheinwerfer nach Anspruch 1,
bei dem die Halbleiterstrahler (HS1,HS2) aufgeteilt sind auf ein erstes Scheinwerfermodul (SMa) und ein zweites Scheinwerfermodul (SMb), welche jeweils einen Beitrag zur Abblendlichtverteilung und/oder Tagfahrlichtverteilung leisten.

3. Fahrzeugscheinwerfer nach Anspruch 2,

- bei dem die Abblendlichtverteilung in Form einer Abblendlicht-Leuchtfläche des ersten und/oder zweiten Scheinwerfermoduls (SMa,SMb) wahrnehmbar ist, und

- wobei die Tagfahrlichtverteilung in Form einer Tagfahrlicht-Leuchtfläche des ersten und/oder zweiten Scheinwerfermoduls (SMa,SMb) wahrnehmbar ist

4. Fahrzeugscheinwerfer nach Anspruch 2,

- bei dem die Abblendlicht-Leuchtfläche und/oder die Tagfahrlicht-Leuchtfläche der beiden Scheinwerfermodule (SMa,SMb) hinsichtlich ihrer Geometrie im Wesentlichen identisch sind.

5. Fahrzeugscheinwerfer nach einem der vorhergehenden Ansprüche,

- bei dem zur Erzeugung der Abblendlichtverteilung und der Tagfahrlichtverteilung Halbleiterstrahler (HS1,HS2) gemeinsam genützt werden oder identische Halbleiterstrahler (HS1,HS2) benützt werden.

6. Fahrzeugscheinwerfer nach einem der vorhergehenden Ansprüche,
bei dem die Halbleiterstrahler (HS1,HS2) und zu diesen gehörige vorgelagerte optische Elemente (OE) derart ausgeführt und relativ zueinander angeordnet sind, dass die Abblendlicht-Leuchtfläche und/oder die Tagfahrlicht-Leuchtfläche hinsichtlich der Helligkeit über die entsprechende Leuchtfläche (LF) als im Wesentlichen homogen wahrnehmbar ist.

7. Fahrzeugscheinwerfer nach Anspruch 2,

mit einer Trägereinrichtung zum Tragen von Halbleiterstrahlern (HS1,HS2) und/oder von optischen Elementen (OE) des ersten und/oder zweiten Scheinwerfermoduls (SMa,SMb), und
mit einer Verschwenkeinrichtung zum Verschwenken der Trägereinrichtung derart, dass die durch das erste und/oder zweite Scheinwerfermodul (SMa,SMb) erzeugte Lichtverteilung vertikal bewegt wird, und
mit einer Steuereinrichtung zum Steuern der Verschwenkeinrichtung derart, dass zur Erzeugung der Tagfahrlichtverteilung zumindest ein Teil der Abblendlichtverteilung nach oben geschwenkt und zumindest teilweise genutzt wird.

8. Fahrzeugscheinwerfer nach einem der vorhergehenden Ansprüche,

mit zumindest einem Abblendlicht-Halbleiterstrahler zur Erzeugung zumindest der Abblendlichtverteilung und
mit zumindest einem Tagfahrlicht-Halbleiterstrahler zur Erzeugung der Tagfahrlichtverteilung,

wobei der Abblendlicht-Halbleiterstrahler und der Tagfahrlicht-Halbleiterstrahler und zumindest ein dem Abblendlicht-Halbleiterstrahler und/oder dem Tagfahrlicht-Halbleiterstrahler zugeordnetes vorgelagertes optisches Element (OE) derart ausgeführt und relativ zueinander angeordnet sind, dass von dem Abblendlicht-Halbleiterstrahler stammendes Licht und von dem Tagfahrlicht-Halbleiterstrahler stammendes Licht durch das selbe optische Element (OE) abgebildet wird.

9. Fahrzeugscheinwerfer nach einem der vorhergehenden Ansprüche,

mit zumindest einem Abblendlicht-Halbleiterstrahler zur Erzeugung zumindest der Abblendlichtverteilung und mit zumindest einem Tagfahrlicht-Halbleiterstrahler zur Erzeugung der Tagfahrlichtverteilung,
wobei dem Abblendlicht-Halbleiterstrahler und/oder dem Tagfahrlicht-Halbleiterstrahler zumindest eine Linse derart vorgelagert ist, dass von dem Abblendlicht-Halbleiterstrahler stammendes Licht und von dem Tagfahrlicht-Halbleiterstrahler stammendes Licht durch die Linse abgebildet werden,
wobei der Tagfahrlicht-Halbleiterstrahler tiefer platziert ist als der Abblendlicht-Halbleiterstrahler.

10. Fahrzeugscheinwerfer nach einem der vorhergehenden Ansprüche,

mit zumindest einem Abblendlicht-Halbleiterstrahler zur Erzeugung zumindest der Abblendlichtverteilung und mit zumindest einem Tagfahrlicht-Halbleiterstrahler zur Erzeugung der Tagfahrlichtverteilung,
wobei dem Abblendlicht-Halbleiterstrahler und/oder dem Tagfahrlicht-Halbleiterstrahler zumindest eine Linse derart vorgelagert ist, dass von dem Abblendlicht-Halbleiterstrahler stammendes Licht und von dem Tagfahrlicht-Halbleiterstrahler stammendes Licht durch die Linse abgebildet werden, wobei von dem Tagfahrlicht-Halbleiterstrahler und/oder von dem Abblendlicht-Halbleiterstrahler stammendes Licht durch zumindest einen Lichtleiter zu einer entsprechenden Tagfahrlicht- Auskoppelstelle bzw. Abblendlicht-Auskoppelstelle geleitet wird, und
wobei der Tagfahrlicht-Halbleiterstrahler und/oder die Auskoppelstelle des Tagfahrlicht-Halbleiterstrahlers tiefer platziert sind als der Abblendlicht-Halbleiterstrahler und/oder die Auskoppelstelle des Abblendlicht-Halbleiterstrahlers.

11. Fahrzeugscheinwerfer nach Anspruch 2,
bei dem das erste, insbesondere äußere, Scheinwerfermodul (SMa) horizontal schwenkbar ist.

12. Fahrzeugscheinwerfer nach einem der vorhergehenden Ansprüche,
bei dem ein unterer Abschnitt, insbesondere die untersten 10% oder 20% oder 30%, einer Leuchtfläche (LF), insbesondere im Wesentlichen, steiler steht als ein oberer Abschnitt, insbesondere die obersten 10% oder 20% oder 30%, der Leuchtfläche (LF).

13. Fahrzeugscheinwerfer nach Anspruch 2,
bei dem der obere, insbesondere rechte, für die Beleuchtung der eigenen Fahrspur, vorgesehene Anteil der Abblendlichtverteilung im Wesentlichen, insbesondere zu mehr als 50% oder 60% oder 70 % oder 80%, durch einen unteren Abschnitt, insbesondere die untersten 10% oder 20% oder 30%, einer Leuchtfläche (LF) des ersten Scheinwerfermoduls und/oder des zweiten Scheinwerfermoduls (SMa,SMb) erzeugt wird.

14. Fahrzeugscheinwerfer nach Anspruch 2,
bei dem der ansteigende, insbesondere asymmetrische, Teil der Hell/Dunkelgrenze der Abblendlichtverteilung im Wesentlichen, insbesondere zu mehr als 50% oder 60% oder 70 % oder 80% oder 90 %durch einen unteren Abschnitt, insbesondere die untersten 10% oder 20% oder 30%, einer Leuchtfläche (LF) des ersten Scheinwerfermoduls und/oder des zweiten Scheinwerfermoduls (SMa,SMb) erzeugt wird.

15. Fahrzeugscheinwerfer nach Anspruch 2,
bei dem der symmetrische Teil der Hell/Dunkelgrenze der Abblendlichtverteilung im Wesentlichen, insbesondere zu mehr als 50% oder 60% oder 70 % oder 80% oder 90 % durch einen unteren Abschnitt, insbesondere die untersten 10% oder 20% oder 30%, der Leuchtfläche (LF) des ersten Scheinwerfermoduls und/oder des zweiten Scheinwerfermoduls (SMa,SMb) erzeugt wird

16. Fahrzeugscheinwerfer nach einem der vorhergehenden Ansprüche,
bei dem durch verschiedene Halbstrahler (HS1,HS2), insbesondere Leuchtdioden (LED) oder Leuchtdiodengruppen (1,2,3,4,5), jeweils eine Lichtstärkeverteilung mit zugeordnetem Schwerpunkt (SP) erzeugt wird, wobei die Halbleiterstrahler (HS1,HS2) und zu diesen gehörige vorgelagerte optische Elemente (OE) derart angeordnet und ausgeführt sind, dass die durch den oder die untersten Halbleiterstrahler (HS1,HS2) erzeugte Lichtstärkeverteilung den höchsten Schwerpunkt (SP) aufweist

17. Fahrzeugscheinwerfer nach Anspruch 2,
bei dem durch verschiedene Halbleiterstrahler (HS1,HS2), insbesondere Leuchtdioden (LED) oder Leuchtdiodengruppen (1,2,3,4,5), jeweils eine Lichtstärkeverteilung mit zugeordnetem Schwerpunkt (SP) erzeugt wird, wobei die Halbleiterstrahler (HS1,HS2) und zu diesen gehörige vorgelagerte optische Elemente (OE) derart angeordnet und ausgeführt sind, dass durch den oder die untersten Halbleiterstrahler (HS1,HS2) zumindest eines Scheinwerfermoduls die Hell/Dunkel-Grenze der Abblendlichtverteilung zumindest abschnittsweise erzeugt wird.

**Claims**

1. Vehicle headlight,

   - having a multiplicity of semiconductor emitters (HS1, HS2), in particular light-emitting diodes (LEDs) or light-emitting diode groups (1, 2, 3, 4, 5), for alternatively producing a low-beam light distribution and a daytime running light distribution,
   - wherein a low-beam light-emitting surface is generated for producing the low-beam light distribution by way of the vehicle headlight,
   - wherein a daytime running light light-emitting surface is generated for producing the daytime running light distribution by way of the vehicle headlight, and
   - wherein the low-beam light-emitting surface and the daytime running light light-emitting surface are substantially identical, which means that the daytime running light light-emitting surface covers at least 60% of the low-beam light-emitting surface and the low-beam light-emitting surface covers at least 60% of the daytime running light light-emitting surface,
   - wherein a light-emitting surface (LF) is that part of an optical device arranged in front of the semiconductor emitters (HS1, HS2) through which at least 70% of the light emitted by the vehicle headlight for producing the corresponding light distribution passes, and
   - wherein the ratio of surface perimeter to surface area with reference to the low-beam light-emitting surface and the daytime running light light-emitting surface is greater than with reference to a rectangle circumscribing this low-beam light-emitting surface and this daytime running light light-emitting surface, or the ratio of surface perimeter to surface area with reference to the low-beam light-emitting surface is greater than with reference to a rectangle circumscribing this low-beam light-emitting surface, or the ratio of surface perimeter to surface area with reference to the daytime running light light-emitting surface is greater than with reference to a rectangle circumscribing this daytime running light light-emitting surface.

2. Vehicle headlight according to Claim 1,
   wherein the semiconductor emitters (HS1, HS2) are distributed over a first headlight module (SMa) and a second headlight module (SMb), which each make a contribution to the low-beam light distribution and/or daytime running light distribution.

3. Vehicle headlight according to Claim 2,

   - wherein the low-beam light distribution is perceivable in the form of a low-beam light-emitting surface of the first and/or second headlight module (SMa, SMb), and
   - wherein the daytime running light distribution is perceivable in the form of a daytime running light light-emitting surface of the first and/or second headlight module (SMa, SMb).

4. Vehicle headlight according to Claim 2,

   - wherein the low-beam light-emitting surface and/or the daytime running light light-emitting surface of the two headlight modules (SMa, SMb) are substantially identical in terms of their geometry.

5. Vehicle headlight according to any of the preceding claims,

   - wherein, for producing the low-beam light distribution and the daytime running light distribution, semiconductor emitters (HS1, HS2) are used together or identical semiconductor emitters (HS1, HS2) are used.

6. Vehicle headlight according to any of the preceding claims,
wherein the semiconductor emitters (HS1, HS2) and associated optical elements (OE), which are arranged in front of them, are designed and arranged in relation to one another such that the low-beam light-emitting surface and/or the daytime running light light-emitting surface is/are substantially homogeneously perceivable with regard to the brightness over the corresponding light-emitting surface (LF).

7. Vehicle headlight according to Claim 2,

having a carrier device for carrying semiconductor emitters (HS1, HS2) and/or for carrying optical elements (OE) of the first and/or second headlight module (SMa, SMb), and
having a pivot device for pivoting the carrier device in a manner such that the light distribution produced by the first and/or second headlight module (SMa, SMb) is moved vertically, and
having a control device for controlling the pivot device in a manner such that at least part of the low-beam light distribution is pivoted upwards and is at least partially used to produce the daytime running light distribution.

8. Vehicle headlight according to any of the preceding claims,

having at least one low-beam semiconductor emitter for producing at least the low-beam light distribution and having at least one daytime running light semiconductor emitter for producing the daytime running light distribution,
wherein the low-beam semiconductor emitter and the daytime running light semiconductor emitter and at least one optical element (OE), which is arranged in front of and is assigned to the low-beam semiconductor emitter and/or the daytime running light semiconductor emitter, are designed and arranged in relation to one another such that light coming from the low-beam semiconductor emitter and light coming from the daytime running light semiconductor emitter is imaged through the same optical element (OE).

9. Vehicle headlight according to any of the preceding claims,

having at least one low-beam semiconductor emitter for producing at least the low-beam light distribution and having at least one daytime running light semiconductor emitter for producing the daytime running light distribution,
wherein at least one lens is arranged in front of the low-beam semiconductor emitter and/or the daytime running light semiconductor emitter such that light coming from the low-beam semiconductor emitter and light coming from the daytime running light semiconductor emitter is imaged through the lens,
wherein the daytime running light semiconductor emitter is placed lower than the low-beam semiconductor emitter.

10. Vehicle headlight according to any of the preceding claims,

having at least one low-beam semiconductor emitter for producing at least the low-beam light distribution and having at least one daytime running light semiconductor emitter for producing the daytime running light distribution,
wherein at least one lens is arranged in front of the low-beam semiconductor emitter and/or the daytime running light semiconductor emitter such that light coming from the low-beam semiconductor emitter and light coming from the daytime running light semiconductor emitter is imaged through the lens,
wherein light coming from the daytime running light semiconductor emitter and/or from the low-beam semiconductor emitter is guided through at least one light guide to a corresponding daytime running light output-coupling point or a low-beam light output-coupling point, and
wherein the daytime running light semiconductor emitter and/or the output-coupling point of the daytime running light semiconductor emitter is/are placed lower than the low-beam semiconductor emitter and/or the output-coupling point of the low-beam semiconductor emitter.

11. Vehicle headlight according to Claim 2,
wherein the first, in particular outer, headlight module (SMa) is pivotable horizontally.

12. Vehicle headlight according to any of the preceding claims,

wherein a lower portion, in particular the lowermost 10% or 20% or 30%, of a light-emitting surface (LF), is, in particular substantially, steeper than an upper portion, in particular the uppermost 10% or 20% or 30%, of the light-emitting surface (LF).

13. Vehicle headlight according to Claim 2,
wherein the upper, in particular right-hand, portion of the low-beam light distribution provided for lighting the own driving lane is produced substantially, in particular to more than 50% or 60% or 70% or 80%, by a lower portion, in particular the lowermost 10% or 20% or 30%, of a light-emitting surface (LF) of the first headlight module and/or of the second headlight module (SMa, SMb).

14. Vehicle headlight according to Claim 2,
wherein the increasing, in particular asymmetrical, part of the cut-off line of the low-beam light distribution is produced substantially, in particular to more than 50% or 60% or 70% or 80% or 90%, by a lower portion, in particular the lowermost 10% or 20% or 30%, of a light-emitting surface (LF) of the first headlight module and/or of the second headlight module (SMa, SMb).

15. Vehicle headlight according to Claim 2,
wherein the symmetrical part of the cut-off line of the low-beam light distribution is produced substantially, in particular to more than 50% or 60% or 70% or 80% or 90%, by a lower portion, in particular the lowermost 10% or 20% or 30%, of the light-emitting surface (LF) of the first headlight module and/or of the second headlight module (SMa, SMb).

16. Vehicle headlight according to any of the preceding claims,
wherein in each case one light intensity distribution with associated centroid (SP) is produced by different semiconductor emitters (HS1, HS2), in particular light-emitting diodes (LEDs) or light-emitting diode groups (1, 2, 3, 4, 5), wherein the semiconductor emitters (HS1, HS2) and associated optical elements (OE), which are arranged in front them, are arranged and designed such that the light intensity distribution produced by the lowermost semiconductor emitter(s) (HS1, HS2) has the highest centroid (SP).

17. Vehicle headlight according to Claim 2,
wherein in each case one light intensity distribution with associated centroid (SP) is produced by different semiconductor emitters (HS1, HS2), in particular light-emitting diodes (LEDs) or light-emitting diode groups (1, 2, 3, 4, 5), wherein the semiconductor emitters (HS1, HS2) and associated optical elements (OE), which are arranged in front of them, are arranged and designed such that the cut-off line of the low-beam light distribution is at least in part produced by the lowermost semiconductor emitter(s) (HS1, HS2) of at least one headlight module.

**Revendications**

1. Phare de véhicule,

   - comprenant une pluralité de projecteurs à semiconducteur (HS1, HS2), notamment des diodes électroluminescentes (LED) ou des groupes de diodes électroluminescentes (1, 2, 3, 4, 5), destinés à produire en alternance une distribution de feu de croisement et une distribution de feu de circulation diurne,
   - une surface lumineuse de feu de croisement étant générée par le phare de véhicule en vue de produire la distribution de feu de croisement,
   - une surface lumineuse de feu de circulation diurne étant générée par le phare de véhicule en vue de produire la distribution de feu de circulation diurne, et
   - surface lumineuse de feu de croisement et la surface lumineuse de feu de circulation diurne étant sensiblement identiques, ce qui veut dire que la surface lumineuse de feu de circulation diurne recouvre au moins 60 % de la surface lumineuse de feu de croisement et la surface lumineuse de feu de croisement recouvre au moins 60 % de la surface lumineuse de feu de circulation diurne,
   - une surface lumineuse (LF) étant la partie d'un dispositif optique monté devant les projecteurs à semiconducteur (HS1, HS2), à travers lequel passent au moins 70 % de la lumière émise par le phare de véhicule en vue de produire la distribution de lumière correspondante, et
   - le rapport entre l'étendue de la surface et le contenu de la surface se référant à la surface lumineuse de feu de croisement et la surface lumineuse de feu de circulation diurne étant plus grand que se référant à un rectangle qui décrit cette surface lumineuse de feu de croisement et cette surface lumineuse de feu de circulation diurne, ou le rapport entre l'étendue de la surface et le contenu de la surface se référant à la surface lumineuse de feu de croisement étant plus grand que se référant à un rectangle qui décrit cette surface lumineuse de feu de croisement, ou le rapport entre l'étendue de la surface et le contenu de la surface se référant à la surface lumineuse de feu de circulation diurne étant plus grand que se référant à un rectangle qui décrit cette surface lumineuse de feu de circulation diurne.

2. Phare de véhicule selon la revendication 1, avec lequel les projecteurs à semiconducteur (HS1, HS2) sont distribués sur un premier module de projecteur (SMa) et un deuxième module de projecteur (SMb), lesquels apportent respectivement une contribution à la distribution de feu de croisement et/ou la distribution de feu de circulation diurne.

3. Phare de véhicule selon la revendication 2,

- avec lequel la distribution de feu de croisement peut être perçue sous la forme d'une surface lumineuse de feu de croisement du premier et/ou du deuxième module de projecteur (SMa, SMb), et
- la distribution de feu de circulation diurne pouvant être perçue sous la forme d'une surface lumineuse de feu de circulation diurne du premier et/ou du deuxième module de projecteur (SMa, SMb).

4. Phare de véhicule selon la revendication 2,

- avec lequel la surface lumineuse de feu de croisement et/ou la surface lumineuse de feu de circulation diurne des deux modules de projecteur (SMa, SMb) sont sensiblement identiques du point de vue de leur géométrie.

5. Phare de véhicule selon l'une des revendications précédentes,

- avec lequel les projecteurs à semiconducteur (HS1, HS2) sont utilisés en commun ou des projecteurs à semiconducteur (HS1, HS2) identiques sont utilisés en vue de produire la distribution de feu de croisement et la distribution de feu de circulation diurne.

6. Phare de véhicule selon l'une des revendications précédentes, avec lequel les projecteurs à semiconducteur (HS1, HS2) et les éléments optiques (OE) montés devant faisant partie de ceux-ci sont réalisés et disposés l'un par rapport à l'autre de telle sorte que la surface lumineuse de feu de croisement et/ou la surface lumineuse de feu de circulation diurne peut être perçue comme étant sensiblement homogène du point de vue de la luminosité sur la surface lumineuse (LF) correspondante.

7. Phare de véhicule selon la revendication 2,

comprenant un dispositif porteur destiné à supporter des projecteurs à semiconducteur (HS1, HS2) et/ou des éléments optiques (OE) du premier et/ou du deuxième module de projecteur (SMa, SMb), et
comprenant un dispositif de pivotement destiné à faire pivoter le dispositif porteur de telle sorte que la distribution de lumière produite par le premier et/ou du deuxième module de projecteur (SMa, SMb) est déplacée verticalement, et
comprenant un dispositif de commande destiné à commander le dispositif de pivotement de telle sorte qu'en vue de produire la distribution de feu de circulation diurne, au moins une partie de la distribution de feu de croisement est pivotée vers le haut et utilisée au moins partiellement.

8. Phare de véhicule selon l'une des revendications précédentes,

comprenant au moins un projecteur à semiconducteur de feu de croisement destiné à produire au moins la distribution de feu de croisement et
comprenant au moins un projecteur à semiconducteur de feu de circulation diurne destiné à produire au moins la distribution de feu de circulation diurne et
le projecteur à semiconducteur de feu de croisement et le projecteur à semiconducteur de feu de circulation diurne et au moins un élément optique (OE) monté devant associé au projecteur à semiconducteur de feu de croisement et/ou au projecteur à semiconducteur de feu de circulation diurne étant réalisés et disposés les uns par rapport aux autres de telle sorte que la lumière émanant du projecteur à semiconducteur de feu de croisement et la lumière émanant du projecteur à semiconducteur de feu de circulation diurne est représentée par le même élément optique (OE).

9. Phare de véhicule selon l'une des revendications précédentes,

comprenant au moins un projecteur à semiconducteur de feu de croisement destiné à produire au moins la distribution de feu de croisement et

comprenant au moins un projecteur à semiconducteur de feu de circulation diurne destiné à produire au moins la distribution de feu de circulation diurne et

au moins une lentille étant montée devant le projecteur à semiconducteur de feu de croisement et/ou le projecteur à semiconducteur de feu de circulation diurne de telle sorte que la lumière émanant du projecteur à semiconducteur de feu de croisement et la lumière émanant du projecteur à semiconducteur de feu de circulation diurne sont représentées par la lentille,

le projecteur à semiconducteur de feu de circulation diurne étant placé plus bas que le projecteur à semiconducteur de feu de croisement.

10. Phare de véhicule selon l'une des revendications précédentes,

comprenant au moins un projecteur à semiconducteur de feu de croisement destiné à produire au moins la distribution de feu de croisement et

comprenant au moins un projecteur à semiconducteur de feu de circulation diurne destiné à produire au moins la distribution de feu de circulation diurne et

au moins une lentille étant montée devant le projecteur à semiconducteur de feu de croisement et/ou le projecteur à semiconducteur de feu de circulation diurne de telle sorte que la lumière émanant du projecteur à semiconducteur de feu de croisement et la lumière émanant du projecteur à semiconducteur de feu de circulation diurne sont représentées par la lentille,

la lumière qui émane du projecteur à semiconducteur de feu de circulation diurne et/ou du projecteur à semiconducteur de feu de croisement étant guidée par au moins une fibre optique vers un point de découplage de feu de circulation diurne ou un point de découplage de feu de croisement, et

le projecteur à semiconducteur de feu de circulation diurne et/ou le point de découplage du projecteur à semiconducteur de feu de circulation diurne étant placé plus bas que le projecteur à semiconducteur de feu de croisement et/ou le point de découplage du projecteur à semiconducteur de feu de croisement.

11. Phare de véhicule selon la revendication 2,

avec lequel le premier module de projecteur (SMa), notamment extérieur, pouvant pivoter horizontalement.

12. Phare de véhicule selon l'une des revendications précédentes,

avec lequel une portion inférieure, notamment les 10 % ou 20 % ou 30 % les plus bas, d'une surface lumineuse (LF) est, notamment sensiblement, plus raide qu'une portion supérieure, notamment les 10 % ou 20 % ou 30 % les plus hauts, de la surface lumineuse (LF).

13. Phare de véhicule selon la revendication 2,

avec lequel la portion de la distribution de feu de croisement supérieure, notamment du côté droit, prévue pour l'éclairage de la propre voie de circulation, est produite sensiblement, notamment à plus de 50 % ou 60 % ou 70 % ou 80 % par une portion inférieure, notamment les 10 % ou 20 % ou 30 % les plus bas, d'une surface lumineuse (LF) du premier module de projecteur et/ou du deuxième module de projecteur (SMa, SMb).

14. Phare de véhicule selon la revendication 2,

avec lequel la partie croissante, notamment asymétrique, de la limite lumineux/sombre de la distribution de feu de croisement est produite sensiblement, notamment à plus de 50 % ou 60 % ou 70 % ou 80 % ou 90 % par une portion inférieure, notamment les 10 % ou 20 % ou 30 % les plus bas, d'une surface lumineuse (LF) du premier module de projecteur et/ou du deuxième module de projecteur (SMa, SMb) .

15. Phare de véhicule selon la revendication 2,

avec lequel la partie symétrique de la limite lumineux/sombre de la distribution de feu de croisement est produite sensiblement, notamment à plus de 50 % ou 60 % ou 70 % ou 80 % ou 90 % par une portion inférieure, notamment les 10 % ou 20 % ou 30 % les plus bas, d'une surface lumineuse (LF) du premier module de projecteur et/ou du deuxième module de projecteur (SMa, SMb).

16. Phare de véhicule selon l'une des revendications précédentes,

avec lequel une distribution d'intensité lumineuse avec un barycentre (SP) associé est respectivement produite par différents projecteurs à semiconducteur (HS1, HS2), notamment des diodes électroluminescentes (LED) ou des groupes de diodes électroluminescentes (1, 2, 3, 4, 5), les projecteurs à semiconducteur (HS1, HS2) et les éléments optiques (OE) montés devant faisant partie de ceux-ci étant disposés et réalisés de telle sorte que la distribution d'intensité lumineuse produite par le ou les projecteurs à semiconducteur (HS1, HS2) les plus bas présente le barycentre (SP) le plus élevé.

17. Phare de véhicule selon la revendication 2,
avec lequel une distribution d'intensité lumineuse avec un barycentre (SP) associé est respectivement produite par différents projecteurs à semiconducteur (HS1, HS2), notamment des diodes électroluminescentes (LED) ou des groupes de diodes électroluminescentes (1, 2, 3, 4, 5), les projecteurs à semiconducteur (HS1, HS2) et les éléments optiques (OE) montés devant faisant partie de ceux-ci étant disposés et réalisés de telle sorte que la limite lumineux/sombre de la distribution de feu de croisement est produite au moins par portions par le ou les projecteurs à semiconducteur (HS1, HS2) les plus bas d'au moins un module de projecteur.

FIG 1

FIG 2

HDG

V3a

SP

V3b

V2/4/a/b

V1/5/a/b

FIG 3

EP 2 477 845 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009129083 A1
- EP 2058585 A2
- DE 10205779 A1
- US 2008062712 A1
- DE 102006046168 A1
- US 2006044818 A1